# EUROPÄISCHE PATENTANMELDUNG

(11) **EP 4 641 318 A1**
(43) Veröffentlichungstag der Anmeldung: **29.10.2025**
(21) Anmeldenummer: 25169641.5
(22) Anmeldetag: 10.04.2025
(51) Int. Cl.: G05B 9/02, G05B 19/042, G05B 19/048

(54) **VERFAHREN ZUR ÜBERPRÜFUNG EINER FUNKTIONSINTEGRITÄT EINER SICHERHEITSSTEUERUNG**

(30) Priorität: 24.04.2024 DE 102024111534
(71) Anmelder: Pilz GmbH & Co. KG, 73760 Ostfildern (DE)
(72) Erfinder: Bauknecht, Jochen, 73760 Ostfildern (DE)
(74) Vertreter: Manske, Jörg

(57) **Zusammenfassung**

Verfahren zur Überprüfung einer Funktionsintegrität einer Sicherheitssteuerung, dazu ausgebildet, eine Anzahl von Sicherheitsfunktionen für mindestens eine Maschine zur Verfügung zu stellen und eine zentrale Auswerte- und Steuereinheit für den Betrieb der Sicherheitssteuerung aufweist, umfassend die Schritte

a) Einschalten der Sicherheitssteuerung,
b) Überprüfen einer gespeicherten, maschinenlesbaren Instruktion, ob von einem Benutzer der Sicherheitssteuerung ein Inbetriebnahmetest durchzuführen ist,
wenn nein, dann Beenden des Verfahrens,
wenn ja, dann Fortfahren mit Verfahrensschritt c),

c) Visualisieren der Information, dass der Inbetriebnahmetest durchzuführen ist, mithilfe eines Anzeigemittels der Sicherheitssteuerung,
d) Starten einer ausführbaren Überprüfungsroutine, mittels derer von der Auswerte- und Steuereinheit automatisiert überprüft wird, ob der Benutzer innerhalb einer bestimmten Zeitdauer jede der Sicherheitsfunktionen aus der Anzahl n ≥ 1 bereitgestellter Sicherheitsfunktionen der Sicherheitssteuerung durch Auslösen der betreffenden Sicherheitsfunktion erfolgreich überprüft hat,
e) Löschen der Instruktion aus dem nicht-flüchtigen Speichermittel, dass der Inbetriebnahmetest durchzuführen ist, wenn im Verfahrensschritt d) alle Sicherheitsfunktionen aus der Anzahl n ≥ 1 bereitgestellter Sicherheitsfunktionen der Sicherheitssteuerung erfolgreich überprüft wurden, oder
f) Speichern der Instruktion in dem nicht-flüchtigen Speichermittel, dass der Inbetriebnahmetest erneut durchzuführen ist, wenn im Verfahrensschritt d) nicht alle Sicherheitsfunktionen erfolgreich überprüft wurden.

## Beschreibung

Die vorliegende Erfindung betrifft ein Verfahren zur Überprüfung einer Funktionsintegrität einer Sicherheitssteuerung, die dazu ausgebildet ist, eine Anzahl n ≥ 1 von Sicherheitsfunktionen für eine Maschine oder eine technischen Anlage mit einer Mehrzahl von Maschinen zur Verfügung zu stellen und eine zentrale Auswerte- und Steuereinheit für den Betrieb der Sicherheitssteuerung aufweist.

Aus dem Stand der Technik sind Sicherheitssteuerungen, die der internationalen Norm IEC 61508 entsprechen, in unterschiedlichen Ausführungsformen bekannt. Derartige Sicherheitssteuerungen dienen insbesondere dem Zweck, technische Anlagen oder Maschinen beim Auftreten einer Gefahrensituation durch die Bereitstellung entsprechender Sicherheitsfunktionen fehlerfrei und sicher in einen für Menschen ungefährlichen Zustand zu überführen. Zu diesem Zweck werden eingangsseitig mittels einer Anzahl von Sicherheitseingängen entsprechende Eingangssignale von Signalgebern beziehungsweise Meldegeräten, bei denen es sich zum Beispiel um Not-Aus-Schalter, Not-Halt-Schalter, Lichtgitter, Lichtvorhänge, Trittmatten, Schutztürpositionsschalter, 3D-Laserscanner, Sicherheitskameras, Sensoren etc. handeln kann, empfangen und sicher ausgewertet. Ausgangsseitig werden entsprechende Sicherheitsausgänge eines Ausgangskreises angesteuert. Über diese Sicherheitsausgänge werden beim Auftreten einer Gefahrensituation Aktoren innerhalb des Ausgangskreises, wie zum Beispiel Schütze, Ventile etc., mit Ausgangssignalen derart angesteuert, dass die an diese Aktoren angeschlossenen Maschinen im Ausgangskreis in einen für Menschen ungefährlichen Zustand überführt werden können.

Die grundlegenden Funktionen, insbesondere die Sicherheitsfunktionen, einer Sicherheitssteuerung können durch eine entsprechende Programmierung der Sicherheitssteuerung definiert werden. Ein entsprechendes Betriebsprogramm, das von der Auswerte- und Steuereinheit während des Betriebs der Sicherheitssteuerung ausgeführt wird, ist in einem nicht-flüchtigen Speichermittel abrufbar gespeichert. Das Betriebsprogramm wird üblicherweise vom Hersteller der Sicherheitssteuerung vorprogrammiert, so dass die Sicherheitssteuerung am Ort des Gebrauchs in Betrieb genommen werden kann. Das Betriebsprogramm umfasst insbesondere Programmcodemittel, mittels derer die Hardwarekomponenten der Sicherheitssteuerung unmittelbar angesprochen werden können.

Eine programmierbare Sicherheitssteuerung ermöglicht es dem Benutzer zum Beispiel auch, die logischen Verknüpfungen der Eingangssignale mittels eines Anwenderprogramms an die konkreten Anforderungen, insbesondere Sicherheitsanforderungen, anzupassen. Eine derartig ausgeführte programmierbare Sicherheitssteuerung weist hierzu ein Betriebsprogramm auf, das vom Anwenderprogramm getrennt ist und den grundlegenden Funktionsumfang der Sicherheitssteuerung definiert. Ferner sind in dem Betriebsprogramm üblicherweise auch sicherheitsgerichtete Steuerregeln implementiert, welche der Benutzer mit seinem Anwenderprogramm zum Beispiel in Form von vordefinierten Funktionsmodulen aufrufen und mit den Eingangs- und Ausgangssignalen der Sicherheitssteuerung parametrisieren kann. Beispielsweise können in dem Betriebsprogramm vordefinierte Funktionsmodule zum fehlersicheren Auswerten eines zweikanaligen Not-Aus-Tasters oder einer zweikanaligen Schutztür enthalten sein. Im Anwenderprogramm muss der Anwender nur noch festlegen, wie die vorbereiteten Module, hier also der Not-Aus-Taster und die Schutztür, logisch miteinander verknüpft sein sollen.

Darüber hinaus ermöglichen es die aus dem Stand der Technik bekannten Sicherheitssteuerungen auch, manuelle Hardwareeinstellungen vorzunehmen, um dadurch bestimmte Betriebsparameter anzupassen, ohne das Betriebsprogramm umprogrammieren zu müssen. Zu diesen veränderbaren Betriebsparametern zählen insbesondere Einschaltverzögerungen oder Ausschaltverzögerungen der Sicherheitsausgänge. Damit diese Hardwareeinstellungen von einem Benutzer vorgenommen werden können, sind physische Einstellelemente, wie zum Beispiel Potentiometer und/oder DIP-Schalter, vorgesehen.

Nach der Erstinstallation einer Sicherheitssteuerung am Betriebsort beziehungsweise nach einer geänderten Programmierung des Betriebsprogramms der Sicherheitssteuerung muss vor dem Start des Produktivbetriebs zunächst ein Inbetriebnahmetest der Sicherheitssteuerung durchgeführt werden. Mithilfe des Inbetriebnahmetests wird überprüft, ob die Sicherheitssteuerung alle darin implementierten Sicherheitsfunktionen tatsächlich ausführen kann oder nicht. Mit anderen Worten wird durch den Inbetriebnahmetest überprüft, ob eine Funktionsintegrität der Sicherheitssteuerung gegeben ist.

Aus Sicht des Herstellers wird dem Benutzer die Durchführung eines derartigen Inbetriebnahmetests vorgeschrieben. Es ist aber letztlich keine Kontrolle möglich, ob der Benutzer diesen an sich vorgeschriebenen Inbetriebnahmetest vor der erstmaligen Aufnahme des Produktivbetriebs der Sicherheitssteuerung nach der Herstellung beziehungsweise nach einer Veränderung des Betriebsprogramms tatsächlich durchgeführt hat oder nicht. Wenn der Inbetriebnahmetest entgegen der Herstellervorgabe nicht durchgeführt wird, kann sich das Problem ergeben, dass die Sicherheitssteuerung die darin implementierten Sicherheitsfunktionen nicht oder nur unzureichend ausführen kann.

Die Erfindung macht es sich daher zur Aufgabe, ein Verfahren zur Überprüfung einer Funktionsintegrität einer Sicherheitssteuerung zur Verfügung zu stellen, mittels dessen überprüft werden kann, ob der vorgeschriebene Inbetriebnahmetest vor der Aufnahme des Produktivbetriebs von einem Benutzer tatsächlich durchgeführt wurde.

Die Lösung dieser Aufgabe liefert ein Verfahren zur Überprüfung einer Funktionsintegrität einer Sicherheitssteuerung mit den Merkmalen des Anspruchs 1. Die Unteransprüche betreffen vorteilhafte Weiterbildungen der Erfindung.

Ein erfindungsgemäßes Verfahren zur Überprüfung einer Funktionsintegrität einer Sicherheitssteuerung, die dazu ausgebildet ist, eine Anzahl n ≥ 1 von Sicherheitsfunktionen für eine Maschine oder eine technische Anlage mit einer Mehrzahl von Maschinen zur Verfügung zu stellen und eine zentrale Auswerte- und Steuereinheit für den Betrieb der Sicherheitssteuerung aufweist, umfasst die Schritte:
a) Einschalten der Sicherheitssteuerung,
b) Überprüfen einer in einem nicht-flüchtigen Speichermittel der Sicherheitssteuerung gespeicherten maschinenlesbaren Instruktion, ob von einem Benutzer der Sicherheitssteuerung ein Inbetriebnahmetest durchzuführen ist, mittels der Auswerte- und Steuereinheit,
   wenn nein, dann Beenden des Verfahrens,
   wenn ja, dann Fortfahren mit Verfahrensschritt c),
c) Visualisieren der Information, dass der Inbetriebnahmetest durchzuführen ist, mithilfe eines Anzeigemittels der Sicherheitssteuerung,
d) Starten einer von der Sicherheitssteuerung ausführbaren Überprüfungsroutine, mittels derer von der Auswerte- und Steuereinheit automatisiert überprüft wird, ob der Benutzer innerhalb einer vordefinierten oder vordefinierbaren Zeitdauer jede der Sicherheitsfunktionen aus der Anzahl n ≥ 1 bereitgestellter Sicherheitsfunktionen der Sicherheitssteuerung durch Auslösen der betreffenden Sicherheitsfunktion erfolgreich überprüft hat,
e) Löschen der Instruktion aus dem nicht-flüchtigen Speichermittel, dass der Inbetriebnahmetest durchzuführen ist, wenn im Verfahrensschritt d) alle Sicherheitsfunktionen aus der Anzahl n ≥ 1 bereitgestellter Sicherheitsfunktionen der Sicherheitssteuerung erfolgreich überprüft wurden, oder
f) Speichern der Instruktion in dem nicht-flüchtigen Speichermittel, dass der Inbetriebnahmetest erneut durchzuführen ist, wenn im Verfahrensschritt d) nicht alle Sicherheitsfunktionen erfolgreich überprüft wurden.

Das erfindungsgemäße Verfahren ermöglicht es, die Funktionsintegrität einer Sicherheitssteuerung zu überprüfen, indem in vorteilhafter Weise sichergestellt werden kann, dass der obligatorische, vom Hersteller vorgeschriebene Inbetriebnahmetest der Sicherheitssteuerung zumindest nach der Erstinstallation am Ort des Gebrauchs und vorzugsweise auch nach jeder Änderung des Betriebsprogramms erfolgreich durchgeführt worden ist. Unter "erfolgreicher Durchführung beziehungsweise erfolgreicher Überprüfung" soll in diesem Zusammenhang verstanden werden, dass die Überprüfung aller n ≥ 1 bereitgestellten Sicherheitsfunktionen überhaupt stattgefunden hat und alle Prüfungen zu dem gewünschten Resultat in Bezug auf die Sicherheitsfunktionen geführt haben. Nur dann ist davon auszugehen, dass die Funktionsintegrität der Sicherheitssteuerung tatsächlich gegeben ist.

Wenn bei der Durchführung des Verfahrens festgestellt wird, dass der Inbetriebnahmetest bereits erfolgreich durchgeführt wurde, ist die Funktionsintegrität der Sicherheitssteuerung gegeben und das Verfahren wird beendet. Die Sicherheitssteuerung kann dann im Produktivbetrieb arbeiten.

Wenn jedoch festgestellt wird, dass der Inbetriebnahmetest noch nicht beziehungsweise noch nicht vollständig erfolgreich durchgeführt wurde, wird der Benutzer dazu angehalten, diesen durchzuführen. Wenn der Inbetriebnahmetest dann erfolgreich durchgeführt wird und im Verfahrensschritt e) die Instruktion aus dem nicht-flüchtigen Speichermittel gelöscht wird, dass der Inbetriebnahmetest durchzuführen ist, ist die Funktionsintegrität der Sicherheitssteuerung gegeben, so dass sie im Produktivbetrieb arbeiten kann.

**In** einer Ausführungsform wird vorgeschlagen, dass die Überprüfungsroutine im Verfahrensschritt d) von der Auswerte- und Steuereinheit automatisiert gestartet wird. Somit ist kein Bedieneingriff des Benutzers erforderlich, um die Überprüfungsroutine zu starten.

In einer alternativen Ausführungsform besteht auch die Möglichkeit, dass die Überprüfungsroutine im Verfahrensschritt d) durch eine Bedieneingabe des Benutzers gestartet wird. Beispielsweise kann die Bedienangabe durch eine Veränderung der Drehstellung eines Potentiometers der Sicherheitssteuerung, durch Betätigen eines physischen Schaltelements der Sicherheitssteuerung oder ferngesteuert erfolgen.

In einer vorteilhaften Ausführungsform wird vorgeschlagen, dass die Sicherheitssteuerung nach der Ausführung des Verfahrensschritts f) automatisiert abgeschaltet wird. Nach dem Wiedereinschalten der Sicherheitssteuerung wird der Benutzer dann dazu angehalten, den Inbetriebnahmetest erneut durchzuführen, da in dem nicht-flüchtigen Speichermittel weiterhin die maschinenlesbare Instruktion gespeichert ist, dass der Inbetriebnahmetest durchzuführen ist.

In einer alternativen Ausführungsform besteht die Möglichkeit, dass die Sicherheitssteuerung nach der Ausführung des Verfahrensschritts f) automatisiert in einen Stopp-Zustand überführt wird, in dem die Sicherheitssteuerung zwar eingeschaltet bleibt, aber keine der Sicherheitsfunktionen bereitstellt. Vorzugsweise kann die Information, dass der Inbetriebnahmetest durchzuführen ist, im Stopp-Zustand der Sicherheitssteuerung mithilfe des Anzeigemittels der Sicherheitssteuerung visualisiert werden.

In einer Ausführungsform wird vorgeschlagen, dass die Überprüfungsroutine im Verfahrensschritt d) im Stopp-Zustand der Sicherheitssteuerung durch eine Bedieneingabe des Benutzers erneut gestartet wird. Beispielsweise kann die Bedienangabe durch eine Veränderung der Drehstellung eines Potentiometers der Sicherheitssteuerung, durch Betätigen eines physischen Schaltelements der Sicherheitssteuerung oder ferngesteuert erfolgen.

In einer Ausführungsform ist vorgesehen, dass die maximale Zeitdauer für das Auslösen aller Sicherheitsfunktionen der Sicherheitssteuerung auf einen definierten Wert festgelegt wird. Daraus resultiert dann eine maximal zulässige Zeitdauer für den gesamten Inbetriebnahmetest. Wird diese maximal zulässige Zeitdauer überschritten, wird der Inbetriebnahmetest abgebrochen und muss von dem Benutzer erneut durchgeführt werden.

In einer weiteren Ausführungsform besteht die Möglichkeit, dass die maximale Zeitdauer für das Auslösen jeder einzelnen Sicherheitsfunktion der Sicherheitssteuerung auf einen individuell definierten Wert festgelegt wird. Daraus resultiert dann eine maximal zulässige Zeitdauer für das Auslösen jeder einzelnen Sicherheitsfunktion. Wird diese maximal zulässige Zeitdauer für das Auslösen einer der Sicherheitsfunktionen überschritten, wird der Inbetriebnahmetest abgebrochen und muss von dem Benutzer erneut durchgeführt werden.

Um sicherzustellen, dass der Inbetriebnahmetest nicht nur nach der Erstinstallation, sondern auch zu einem späteren Zeitpunkt nach einer vorgenommenen Änderung beziehungsweise Umprogrammierung des Betriebsprogramms der Sicherheitssteuerung durchgeführt wird, wird in einer besonders vorteilhaften Ausführungsform vorgeschlagen, dass vor der Durchführung des Verfahrensschritts b) von der Auswerte- und Steuereinheit eine maschinenlesbare Information aus dem nicht-flüchtigen Speichermittel ausgelesen wird, ob das Betriebsprogramm nach der letztmaligen Durchführung des Inbetriebnahmetests verändert wurde. Bei dieser maschinenlesbaren Information kann es sich insbesondere um eine Zeitinformation handeln, die angibt, wann das Betriebsprogramm letztmals geändert wurde und somit eine Art "Zeitstempel" des Betriebsprogramms bildet, oder um eine sonstige Versionsinformation des Betriebsprogramms handeln. Ergibt die Überprüfung, dass das Betriebsprogramm geändert wurde, wird in dem nicht-flüchtigen Speichermittel der Sicherheitssteuerung die maschinenlesbare Instruktion, dass von einem Benutzer der Sicherheitssteuerung ein Inbetriebnahmetest durchzuführen ist, gespeichert. Anschließend wird das Verfahren mit dem Verfahrensschritt b) fortgesetzt.

Weitere Merkmale und Vorteile eines Ausführungsbeispiels der Erfindung werden nachfolgend unter Bezugnahme auf die Zeichnungen nachfolgend beschrieben. Es zeigen:
- Fig. 1: eine schematisch stark vereinfachte Darstellung einer Sicherheitssteuerung,
- Fig. 2: eine schematische Darstellung, welche den grundlegenden Ablauf eines Verfahrens zur Überprüfung einer Funktionsintegrität der in Fig. 1 dargestellten Sicherheitssteuerung veranschaulicht.

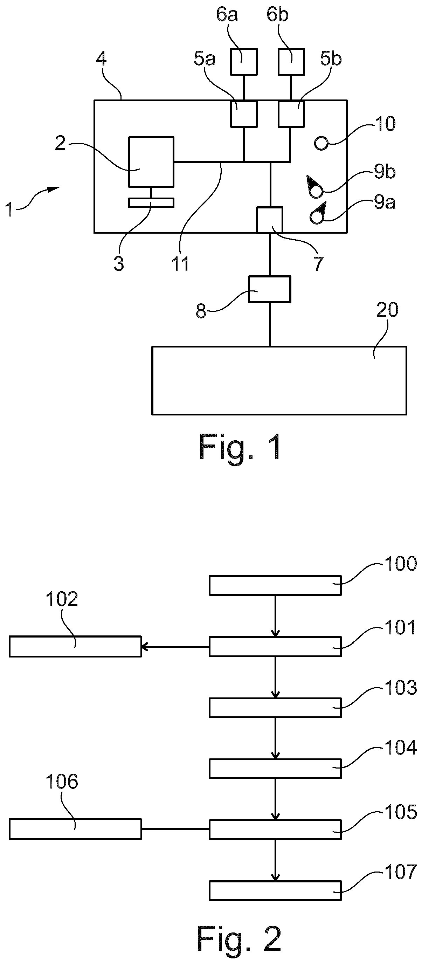

Unter Bezugnahme auf Fig. 1 weist eine Sicherheitssteuerung 1, die dazu ausgebildet ist, eine Anzahl n ≥ 1 von Sicherheitsfunktionen für eine Maschine 20 oder technische Anlage mit einer Mehrzahl von Maschinen zur Verfügung zu stellen, eine zentrale Auswerte- und Steuereinheit 2 für den Betrieb der Sicherheitssteuerung 1 auf. Die zentrale Auswerte- und Steuereinheit 2 ist prozessorbasiert und kann zum Beispiel zumindest einen Microcontroller umfassen. Vorzugsweise ist die zentrale Auswerte- und Steuereinheit 2 redundant ausgeführt und umfasst somit zwei Microcontroller. Dadurch kann sichergestellt werden, dass die zentrale Auswerte- und Steuereinheit 2 auch dann funktionsfähig bleibt, wenn einer der beiden Microcontroller einen Defekt aufweist.

Die Sicherheitssteuerung 1 umfasst ferner ein nicht-flüchtiges Speichermittel 3, in der unter anderem ein Betriebsprogramm, welches während des Betriebs der Sicherheitssteuerung 1 von der zentralen Auswerte- und Steuereinheit 2 ausgeführt wird, abrufbar gespeichert ist. Nach dem Einschalten der Sicherheitssteuerung 1 wird das Betriebsprogramm in ein flüchtiges, hier nicht explizit dargestelltes Speichermittel, insbesondere einen RAM-Speicher, der Auswerte- und Steuereinheit 2 geladen und wird von dieser ausgeführt. Die Auswerte- und Steuereinheit 2 und das nicht-flüchtige Speichermittel 3 sind in einem Gehäuse 4 der Sicherheitssteuerung 1 untergebracht.

Die Sicherheitssteuerung 1 weist in diesem Ausführungsbeispiel zwei Sicherheitseingänge 5a, 5b auf, die jeweils redundant und somit zweikanalig ausgebildet sind und jeweils zwei Einzeleingänge aufweisen. An die Sicherheitseingänge 5a, 5b wird vor der erstmaligen Inbetriebnahme der Sicherheitssteuerung 1 jeweils ein Signalgeber 6a, 6b angeschlossen. Um welche Arten von Signalgebern 6a, 6b es sich handelt, hängt insbesondere von den Betriebsbedingungen der Maschine 20 beziehungsweise technischen Anlage ab. Ausdrücklich nicht als abschließend zu verstehende Beispiele für derartige Signalgeber 6a, 6b sind Not-Aus-Schalter, Not-Halt-Schalter, Lichtgitter, Lichtvorhänge, Trittmatten, Schutztürpositionsschalter, Sicherheitskameras oder auch 3D-Laserscanner. Als Signalgeber 6a, 6b können auch Sensoren verwendet werden, die sicherheitskritische physikalische Messgrößen erfassen.

Ferner umfasst die Sicherheitssteuerung 1 in diesem Ausführungsbeispiel zumindest einen Sicherheitsausgang 7, der ebenfalls redundant und somit zweikanalig ausgebildet ist und zwei Einzelausgänge aufweist. An diesen Sicherheitsausgang 7 ist ein Aktor 8 angeschlossen, der seinerseits an die Maschine 20 angeschlossen ist und dadurch mit der Maschine 20 zusammenwirkt. Der Aktor 8 ist dazu ausgebildet, die Maschine 20 in einen für die Umgebung und insbesondere für Menschen ungefährlichen Zustand zu überführen, wenn der Aktor 8 im Falle des Auftretens einer Gefahrensituation von der Sicherheitssteuerung 1 entsprechend angesteuert wird. Der Aktor 8 kann zum Beispiel zumindest einen Schütz oder zumindest ein Ventil umfassen. Vorzugsweise ist der Aktor 8 ebenfalls redundant ausgebildet. Häufig weisen Sicherheitssteuerungen 1 mehrere derartige Sicherheitsausgänge 7 auf, an denen jeweils ein Aktor 8 angeschlossen ist, so dass es möglich ist, mehrere Aktoren 8 und somit insbesondere auch mehrere Maschinen 2 an die Sicherheitssteuerung 1 anzuschließen.

Über eine Bus-Leitung 11 stehen die Sicherheitseingänge 5a, 5b und der Sicherheitsausgang 7 mit der Auswerte- und Steuereinheit 2 in Kommunikationsverbindung.

Ferner weist die Sicherheitssteuerung 1 eine Anzahl von Potentiometern 9a, 9b auf, mittels derer bestimmte Funktionen der Sicherheitssteuerung 1, wie zum Beispiel eine Einschalt- oder Ausschaltverzögerung des Sicherheitsausgangs 7, von einem Benutzer parametrisiert werden können. Beispielhaft sind vorliegend zwei Potentiometer 9a, 9b vorgesehen. Ferner weist die Sicherheitssteuerung 1 ein oder mehrere Anzeigemittel 10, insbesondere eine oder mehrere farbige Leuchtdioden auf, mittels derer der aktuelle Betriebsstatus der Sicherheitssteuerung 1 durch entsprechende Leuchtfarben visualisiert werden kann. Alternativ oder zusätzlich besteht auch die Möglichkeit, dass als Anzeigemittel 10 eine Displayvorrichtung verwendet wird, mittels derer Informationen über den aktuellen Betriebsstatus der Sicherheitssteuerung 1 und gegebenenfalls weitere Informationen grafisch und/oder in Textform angezeigt werden können.

Es ist grundsätzlich möglich, die Sicherheitssteuerung 1 modular auszuführen, so dass sie eine Mehrzahl von Funktionsmodulen mit entsprechenden Sicherheitseingängen 5a, 5b und/oder Sicherheitsausgängen 7 aufweist.

Wenn die in Fig. 1 dargestellte Sicherheitssteuerung 1 im Produktivbetrieb von einem der Signalgeber 6a, 6b ein Meldesignal empfängt, dass eine Gefahrensituation vorliegt, wird der an den Sicherheitsausgang 5a, 5b im Ausgangskreis angeschlossene Aktor 8 fehlersicher angesteuert, so dass die Maschine 20 abgeschaltet beziehungsweise in sonstiger Weise in einen für Menschen ungefährlichen Zustand überführt wird. Wenn der Aktor 8 zum Beispiel zumindest einen Schütz umfasst, wird ein Abschaltsignal erzeugt, so dass kein Steuerstrom mehr durch die Magnetspule des Schützes fließt. Dieses hat zur Folge, dass die Schaltkontakte des Schützes geöffnet werden und die daran angeschlossene Maschine 20 stromlos wird (d.h. ein Not-Aus der Maschine 20). Die Sicherheitssteuerung 1 bildet dann aus funktionaler Sicht ein Sicherheitsschaltgerät, welches ein Schaltausgangssignal (vorliegend ein Abschaltsignal) liefert. Grundsätzlich kann die Sicherheitssteuerung 1 auch so ausgebildet sein, dass sie darüber hinaus andere Ausgangssignale als nur Schaltausgangssignale erzeugen kann.

Nach der Erstinstallation der Sicherheitssteuerung 1 am Betriebsort beziehungsweise nach einer geänderten Programmierung des Betriebsprogramms der Sicherheitssteuerung 1 ist es erforderlich, vor Beginn des Produktivbetriebs zunächst einen Inbetriebnahmetest durchzuführen. Dieser Inbetriebnahmetest dient der Überprüfung, ob die Sicherheitssteuerung 1 alle darin implementierten Sicherheitsfunktionen tatsächlich mit dem gewünschten/erforderlichen Resultat ausführen kann. Mit anderen Worten wird durch den Inbetriebnahmetest überprüft, ob eine Funktionsintegrität der Sicherheitssteuerung 1 vorliegt, die es erlaubt, die Sicherheitssteuerung 1 im Produktivbetrieb zu verwenden.

Aus Sicht des Herstellers der Sicherheitssteuerung 1 wird dem Benutzer die Durchführung eines derartigen Inbetriebnahmetests vorgeschrieben. Es ist aber letztlich keine Kontrolle möglich, ob dieser Inbetriebnahmetest vor der erstmaligen Aufnahme des Produktivbetriebs der Sicherheitssteuerung 1 nach der Erstinstallation beziehungsweise nach einer Veränderung des Betriebsprogramms tatsächlich durchgeführt wurde. Wenn der Inbetriebnahmetest entgegen der Herstellervorgabe nicht durchgeführt wird, kann sich das Problem ergeben, dass die Sicherheitssteuerung 1 die darin implementierten Sicherheitsfunktionen nicht oder nur unzureichend ausführen kann.

Um diesem Problem abzuhelfen, wird nachfolgend unter weiterer Bezugnahme auf Fig. 2 ein Verfahren zur Überprüfung der Funktionsintegrität der Sicherheitssteuerung 1 näher erläutert, mittels dessen sichergestellt werden kann, dass der vom Hersteller geforderte Inbetriebnahmetest tatsächlich erfolgreich durchgeführt wurde, bevor die Sicherheitssteuerung 1 im Produktivbetrieb verwendet werden kann.

Das Verfahren zur Überprüfung der Funktionsintegrität der Sicherheitssteuerung 1, die dazu ausgebildet ist, in der Maschine 20 oder in der technischen Anlage mit einer Mehrzahl von Maschinen 20 eine Anzahl n ≥ 1 von Sicherheitsfunktionen zur Verfügung zu stellen, umfasst die Schritte:
a) Einschalten 100 (und somit Aktivieren) der Sicherheitssteuerung 1,
b) Überprüfen 101 einer in dem nicht-flüchtigen Speichermittel 3 der Sicherheitssteuerung 1 gespeicherten, maschinenlesbaren Instruktion, ob von einem Benutzer der Sicherheitssteuerung 1 ein Inbetriebnahmetest durchzuführen ist, mittels der Auswerte- und Steuereinheit 2,
   wenn nein, dann Beenden 102 des Verfahrens,
   wenn ja, dann Fortfahren 103 mit Verfahrensschritt c),
c) Visualisieren 104 der Information, dass der Inbetriebnahmetest durchzuführen ist, mithilfe des Anzeigemittels 10 der Sicherheitssteuerung 1,
d) Starten 105 einer von der Sicherheitssteuerung 1 ausführbaren Überprüfungsroutine, mittels derer von der Auswerte- und Steuereinheit 2 automatisiert überprüft wird, ob der Benutzer innerhalb einer bestimmten Zeitdauer jede der Sicherheitsfunktionen aus der Anzahl n ≥ 1 bereitgestellter Sicherheitsfunktionen der Sicherheitssteuerung 1 durch Auslösen der betreffenden Sicherheitsfunktion erfolgreich überprüft hat,
e) Löschen 106 der Instruktion aus dem nicht-flüchtigen Speichermittel, dass der Inbetriebnahmetest durchzuführen ist, wenn im Verfahrensschritt d) alle Sicherheitsfunktionen aus der Anzahl n ≥ 1 bereitgestellter Sicherheitsfunktionen der Sicherheitssteuerung 1 erfolgreich überprüft wurden, oder
f) Speichern 107 der Instruktion in dem nicht-flüchtigen Speichermittel 3, dass der Inbetriebnahmetest erneut durchzuführen ist, wenn im Verfahrensschritt d) nicht alle Sicherheitsfunktionen erfolgreich überprüft wurden.

Wenn bei der Durchführung des Verfahrens festgestellt wird, dass der Inbetriebnahmetest zuvor bereits erfolgreich durchgeführt wurde, ist die Funktionsintegrität der Sicherheitssteuerung 1 gegeben und das Verfahren wird beendet. Die Sicherheitssteuerung 1 kann dann uneingeschränkt im Produktivbetrieb arbeiten. Wenn jedoch festgestellt wird, dass der Inbetriebnahmetest noch nicht beziehungsweise noch nicht vollständig durchgeführt wurde, wird der Benutzer dazu angehalten, diesen erneut durchzuführen, bevor die Sicherheitssteuerung 1 im Produktivbetrieb arbeiten kann.

In einer Ausführungsform des hier vorgestellten Verfahrens kann die Überprüfungsroutine im Verfahrensschritt d) von der Auswerte- und Steuereinheit 2 automatisiert gestartet werden. Somit ist kein zusätzlicher Bedieneingriff des Benutzers erforderlich, um die Überprüfungsroutine zu starten. **In** einer alternativen Ausführungsform besteht auch die Möglichkeit, dass die Überprüfungsroutine im Verfahrensschritt d) durch eine Bedieneingabe des Benutzers gestartet wird. Beispielsweise kann die Bedienangabe durch eine Veränderung der Drehstellung eines der Potentiometer 9a, 9b der Sicherheitssteuerung 1, durch Betätigen eines physischen Schaltelements der Sicherheitssteuerung 1 oder ferngesteuert erfolgen.

In einer Ausführungsform des Verfahrens ist es möglich, dass die Sicherheitssteuerung 1 nach der Ausführung des Verfahrensschritts f) automatisiert abgeschaltet wird. Nach dem Wiedereinschalten der Sicherheitssteuerung 1 wird der Benutzer dann dazu angehalten, den Inbetriebnahmetest erneut durchzuführen, da in dem nicht-flüchtigen Speichermittel 3 der Sicherheitssteuerung 1 weiterhin die maschinenlesbare Instruktion gespeichert ist, dass der Inbetriebnahmetest durchzuführen ist.

In einer alternativen Ausführungsform besteht die Möglichkeit, dass die Sicherheitssteuerung 1 nach der Ausführung des Verfahrensschritts f) automatisiert in einen Stopp-Zustand überführt wird, in dem die Sicherheitssteuerung 1 zwar eingeschaltet bleibt, aber keine der Sicherheitsfunktionen bereitstellt. Vorzugsweise kann die Information, dass der Inbetriebnahmetest durchzuführen ist, im Stopp-Zustand der Sicherheitssteuerung 1 mithilfe des Anzeigemittels 10 der Sicherheitssteuerung 1 visualisiert werden.

In einer Ausführungsform wird vorgeschlagen, dass die Überprüfungsroutine im Verfahrensschritt d) im Stopp-Zustand der Sicherheitssteuerung 1 durch eine Bedieneingabe des Benutzers erneut gestartet wird. Beispielsweise kann die Bedienangabe durch eine Veränderung der Drehstellung eines der Potentiometer 9a, 9b der Sicherheitssteuerung 1, durch Betätigen eines physischen Schaltelements der Sicherheitssteuerung 1 oder ferngesteuert erfolgen.

In einer Ausführungsform ist vorgesehen, dass die maximale Zeitdauer für das Auslösen aller Sicherheitsfunktionen der Sicherheitssteuerung 1 auf einen definierten Wert festgelegt wird. Daraus resultiert dann eine maximal zulässige Zeitdauer für den gesamten Inbetriebnahmetest. Wird diese maximal zulässige Zeitdauer überschritten, wird der Inbetriebnahmetest abgebrochen und muss von dem Benutzer erneut durchgeführt werden. Die maschinenlesbare Instruktion, dass von einem Benutzer der Sicherheitssteuerung 1 ein Inbetriebnahmetest durchzuführen ist, bleibt in dem nicht-flüchtigen Speichermittel 3 gespeichert.

In einer weiteren Ausführungsform kann vorgesehen sein, dass die maximale Zeitdauer für das Auslösen jeder einzelnen Sicherheitsfunktion der Sicherheitssteuerung 1 auf einen individuell definierten Wert festgelegt wird. Wird diese maximal zulässige Zeitdauer für das Auslösen einer der Sicherheitsfunktionen überschritten, wird der Inbetriebnahmetest abgebrochen und muss von dem Benutzer erneut durchgeführt werden. Die maschinenlesbare Instruktion, dass von einem Benutzer der Sicherheitssteuerung 1 ein Inbetriebnahmetest durchzuführen ist, bleibt in dem nicht-flüchtigen Speichermittel 3 gespeichert.

Um sicherzustellen, dass der Inbetriebnahmetest der Sicherheitssteuerung 1 nicht nur nach der Erstinstallation, sondern auch zu einem späteren Zeitpunkt nach einer vorgenommenen Änderung des Betriebsprogramms der Sicherheitssteuerung 1 durchgeführt wird, ist vorzugsweise vorgesehen, dass nach dem Einschalten 100 und vor der Durchführung des Verfahrensschritts b) von der Auswerte- und Steuereinheit 2 eine maschinenlesbare Information aus dem nicht-flüchtigen Speichermittel 3 ausgelesen und entsprechend ausgewertet wird, ob das Betriebsprogramm nach der letztmaligen Durchführung des Inbetriebnahmetests verändert wurde. Bei dieser maschinenlesbaren Information kann es sich insbesondere um eine Zeitinformation, die angibt, wann das Betriebsprogramm letztmals geändert wurde (d.h. eine Art "Zeitstempel" des Betriebsprogramms), oder um eine anderweitige, insbesondere manipulationssichere, Versionsinformation des Betriebsprogramms handeln.

Ergibt diese von der Auswerte- und Steuereinheit 2 durchgeführte Überprüfung, dass das Betriebsprogramm geändert wurde, wird in dem nicht-flüchtigen Speichermittel 3 der Sicherheitssteuerung 1 die maschinenlesbare Instruktion, dass von einem Benutzer der Sicherheitssteuerung 1 der Inbetriebnahmetest durchzuführen ist, gespeichert. Anschließend wird das Verfahren mit dem Verfahrensschritt b) fortgesetzt.

Das vorstehend angegebene Verfahren ermöglicht es, die Funktionsintegrität der Sicherheitssteuerung 1 zu überprüfen, indem in vorteilhafter Weise sichergestellt werden kann, dass der obligatorische, vom Hersteller vorgeschriebene Inbetriebnahmetest der Sicherheitssteuerung 1 zumindest nach der Erstinstallation und vorzugsweise auch nach jeder Änderung des Betriebsprogramms erfolgreich durchgeführt worden ist. Das Verfahren ermöglicht die Feststellung, ob alle bereitgestellten Sicherheitsfunktionen der Sicherheitssteuerung 1 tatsächlich überprüft wurden und alle Überprüfungen auch erfolgreich waren.

## Patentansprüche

1. Verfahren zur Überprüfung einer Funktionsintegrität einer Sicherheitssteuerung (1), die dazu ausgebildet ist, eine Anzahl n ≥ 1 von Sicherheitsfunktionen für eine Maschine (20) oder eine technische Anlage mit einer Mehrzahl von Maschinen (20) zur Verfügung zu stellen und eine zentrale Auswerte- und Steuereinheit (2) für den Betrieb der Sicherheitssteuerung (1) aufweist, umfassend die Schritte:
a) Einschalten (100) der Sicherheitssteuerung (1),
b) Überprüfen (101) einer in einem nicht-flüchtigen Speichermittel (3) der Sicherheitssteuerung (1) gespeicherten, maschinenlesbaren Instruktion, ob von einem Benutzer der Sicherheitssteuerung (1) ein Inbetriebnahmetest durchzuführen ist, mittels der Auswerte- und Steuereinheit (2),
wenn nein, dann Beenden (102) des Verfahrens,
wenn ja, dann Fortfahren (103) mit Verfahrensschritt c),
c) Visualisieren (104) der Information, dass der Inbetriebnahmetest durchzuführen ist, mithilfe eines Anzeigemittels (10) der Sicherheitssteuerung (1),
d) Starten (105) einer von der Sicherheitssteuerung (1) ausführbaren Überprüfungsroutine, mittels derer von der Auswerte- und Steuereinheit (2) automatisiert überprüft wird, ob der Benutzer innerhalb einer bestimmten Zeitdauer jede der Sicherheitsfunktionen aus der Anzahl n ≥ 1 bereitgestellter Sicherheitsfunktionen der Sicherheitssteuerung (1) durch Auslösen der betreffenden Sicherheitsfunktion erfolgreich überprüft hat,
e) Löschen (106) der Instruktion aus dem nicht-flüchtigen Speichermittel (3), dass der Inbetriebnahmetest durchzuführen ist, wenn im Verfahrensschritt d) alle Sicherheitsfunktionen aus der Anzahl n ≥ 1 bereitgestellter Sicherheitsfunktionen der Sicherheitssteuerung (1) erfolgreich überprüft wurden, oder
f) Speichern (107) der Instruktion in dem nicht-flüchtigen Speichermittel (3), dass der Inbetriebnahmetest erneut durchzuführen ist, wenn im Verfahrensschritt d) nicht alle Sicherheitsfunktionen erfolgreich überprüft wurden.

2. Verfahren nach Anspruch 1, **dadurch gekennzeichnet, dass** die Überprüfungsroutine im Verfahrensschritt d) von der Auswerte- und Steuereinheit (2) automatisiert gestartet wird.

3. Verfahren nach Anspruch 1, **dadurch gekennzeichnet, dass** die Überprüfungsroutine im Verfahrensschritt d) durch eine Bedieneingabe des Benutzers gestartet wird.

4. Verfahren nach einem der Ansprüche 1 bis 3, **dadurch gekennzeichnet, dass** die Sicherheitssteuerung (1) nach der Ausführung des Verfahrensschritts f) automatisiert abgeschaltet wird.

5. Verfahren nach einem der Ansprüche 1 bis 3, **dadurch gekennzeichnet, dass** die Sicherheitssteuerung (1) nach der Ausführung des Verfahrensschritts f) automatisiert in einen Stopp-Zustand überführt wird, in dem die Sicherheitssteuerung (1) zwar aktiviert bleibt, aber keine der Sicherheitsfunktionen bereitstellt.

6. Verfahren nach Anspruch 5, **dadurch gekennzeichnet, dass** die Information, dass der Inbetriebnahmetest durchzuführen ist, im Stopp-Zustand der Sicherheitssteuerung (1) mithilfe des Anzeigemittels (10) der Sicherheitssteuerung (1) visualisiert wird.

7. Verfahren nach einem der Ansprüche 5 oder 6, **dadurch gekennzeichnet, dass** die Überprüfungsroutine im Verfahrensschritt d) im Stopp-Zustand der Sicherheitssteuerung (1) durch eine Bedieneingabe des Benutzers erneut gestartet wird.

8. Verfahren nach einem der Ansprüche 1 bis 7, **dadurch gekennzeichnet, dass** die maximale Zeitdauer für das Auslösen aller Sicherheitsfunktionen der Sicherheitssteuerung (1) auf einen definierten Wert festgelegt wird.

9. Verfahren nach einem der Ansprüche 1 bis 8, **dadurch gekennzeichnet, dass** die maximale Zeitdauer für das Auslösen jeder einzelnen Sicherheitsfunktion der Sicherheitssteuerung (1) auf einen individuell definierten Wert festgelegt wird.

10. Verfahren nach einem der Ansprüche 1 bis 9, **dadurch gekennzeichnet, dass** vor der Durchführung des Verfahrensschritts b) von der Auswerte- und Steuereinheit (2) eine maschinenlesbare Information aus dem nicht-flüchtigen Speichermittel (3) ausgelesen wird, ob das Betriebsprogramm nach der letztmaligen Durchführung des Inbetriebnahmetests verändert wurde, wobei bejahendenfalls in dem nicht-flüchtigen Speichermittel (3) der Sicherheitssteuerung (1) die maschinenlesbare Instruktion gespeichert wird, dass von einem Benutzer der Sicherheitssteuerung (1) ein Inbetriebnahmetest durchzuführen ist, gespeichert wird.
